# EUROPEAN PATENT SPECIFICATION

(11) **EP 3 058 129 B1**
(45) Date of publication and mention of the grant of the patent: **11.04.2018**
(21) Application number: 14784435.1
(22) Date of filing: 14.10.2014
(51) Int. Cl.: D04H 3/04, D04H 5/06, D06N 3/06, D06N 7/00, D04H 3/004, D04H 3/14

(54) **VINYL FLOOR COVERING**
GEPOLSTERTE FUSSBODENABDECKUNGEN AUS VINYL
REVÊTEMENT DE SOL EN VINYLE COUSSINÉ

(30) Priority: 18.10.2013 EP 13189204
(43) Date of publication of application: 24.08.2016
(73) Proprietor: Low & Bonar B.V., 6827 AV Arnhem (NL)
(72) Inventor: VAN DER ZIJPP, Ype, NL-8131 GH Wijhe (NL); BERKHOFF, Marc, NL-6717 VD Ede (NL); STIGTER, Leonie, 3972 TW Driebergen (NL)
(74) Representative: CPW GmbH
(86) International application number: PCT/EP2014/071965
(87) International publication number: WO 2015/055618

(56) References cited:
- EP-A1- 1 972 707
- EP-A1- 2 075 360
- EP-A1- 2 309 046
- EP-A2- 2 607 533
- WO-A1-2008/039262
- GB-A- 1 293 685
- US-A- 5 118 550

## Description

The invention pertains to vinyl floor coverings.

Vinyl floor coverings basically can be prepared by two different methods. The first method comprises the steps of supplying a calandered coherent sheet of PVC having a controlled thickness, which is subsequently laminated onto a backing material, as for example disclosed by US 2008/0193697 A1. As the calandered sheet of PVC is already a coherent material, the backing material is generally not subjected to treatments at elevated temperatures and the tensions applied to the backing are generally relatively low.

The second method of preparing vinyl floor coverings comprises the steps of supplying a PVC plastisol, and impregnating the PVC plastisol into a carrier material. After impregnation of the carrier material, the PVC plastisol is gelated at elevated temperature to obtain a coherent layer of PVC.

For example, cushioned vinyl floor covering may be made by applying several PVC based layers on a carrier material, each layer of PVC having its own function.

The carrier is impregnated with a layer of PVC plastisol, which is gelated at elevated temperature, generally in the range of 140°C to 170°C, while the impregnated carrier is in contact with the surface of a hot (metal) roller. Subsequently, a foaming layer of PVC plastisol comprising a blowing agent is coated on the gelated impregnation layer, which is then also gelated at elevated temperature.

Desired ink patterns are applied onto the gelated foaming layer using printing units. On top of this printing layer a layer of clear, transparent PVC plastisol is applied as a wear layer, which again is gelated at elevated temperature. At the bottom side a backing layer of foamable PVC plastisol comprising a relatively large amount of blowing agent may be applied. The blowing agents in the PVC plastisol of the foaming layer and the backing layer are activated in a curing step at a temperature above the gelation temperatures, generally in the range of 170°C to 230°C, to foam and to cure the PVC in the foaming layer and in the backing layer in order to obtain the cushioned vinyl floor covering.

Cushioned vinyl floor covering comprising a nonwoven carrier composed of thermoplastic fibers is known, for example from FR2013722 A1 and WO2005/118947 A1. Such a nonwoven carrier composed of thermoplastic fibers provides better tear resistance and flexibility to the cushioned vinyl floor covering as compared to non-thermoplastic fiber based carriers.

FR2013722 A1 discloses a nonwoven mat made from nylon (polyamide) filaments with a vinyl chloride coating usable as floor covering. The nonwoven mat is bonded by hydrogen bonds at the points of intersection of the filaments.

WO2005/118947 A1 discloses a nonwoven carrier wherein the nonwoven is made from different polymers and the nonwoven carrier is thermally bonded by a polymer originating from the filaments comprised in the nonwoven carrier.

WO2008/039262 A1 discloses a wetlaid staple fiber nonwoven as carrier for cushion vinyl floor covering having improved stiffness.

However, it is observed that vinyl floor coverings comprising a nonwoven carrier composed of thermoplastic fibers may exhibit wrinkles during processing in the vinyl floor covering manufacturing process which extend essentially in machine direction of the vinyl floor covering, which results in low quality vinyl floor covering or even in rejected product, i.e. waste material, depending on the quantity and magnitude of the wrinkles.

Although a carrier for vinyl floor covering comprising a nonwoven layer of fibers comprising thermoplastic fibers and a scrim composed of glass yarns both as warp and weft threads may reduce the formation of wrinkles extending in machine direction in the vinyl floor covering, the scrim having glass yarns as weft threads may, depending on the actual tension and/or temperature encountered in the vinyl floor covering manufacturing process, induce surface irregularities in the final vinyl floor covering and/or may cause printing errors in the desired ink patterns applied onto the gelated foaming layer.

It is an object of the invention to provide a vinyl floor covering comprising a carrier material comprising a nonwoven layer containing thermoplastic fibers, which exhibits no wrinkles, or at least less and/or smaller wrinkles, extending in machine direction of the vinyl floor covering and which do not exhibit surface irregularities or printing errors.

The object of the invention is achieved by a vinyl floor covering in accordance with claim 1.

The presence of high modulus threads having a modulus of at least 1 GPa extending in the longitudinal direction, also known as machine direction, of the vinyl floor covering prevents, or at least reduces, the formation of wrinkles extending in longitudinal direction in the vinyl floor covering. It is believed that the presence of the high modulus threads extending in longitudinal direction reduces the strain in machine direction in the nonwoven layer of fibers comprising thermoplastic fibers of the carrier, wherein the thermoplastic fibers are thermoplastic filaments having a length of more than 200 mm, resulting from the high tensions encountered in the vinyl floor covering manufacturing process. As the high modulus threads extending in the longitudinal direction reduce the strain in machine direction, the nonwoven layer of fibers will exhibit less contraction and/or shrinkage in cross machine direction. Wrinkles in the nonwoven layer of fibers are believed to occur due to local variations in stress-strain behaviour at non-uniformities in the mass regularity of the nonwoven layer of fibers.

In an embodiment, the vinyl floor covering is a cushioned vinyl floor covering.

Within the scope of the present invention the term carrier or carrier material is understood to mean a material which is suitable to be impregnated with a PVC plastisol.

The term backing or backing material is understood to mean a material which is suitable to be laminated with a calandered coherent sheet of PVC. The backing is adhered to the sheet of PVC.

A general demand to carriers for (cushioned) vinyl floor coverings is sufficient surface regularity, i.e. a sufficiently even thickness over the surface of the carrier, necessary to apply the impregnation layer regularly over the full width of the carrier. Furthermore, sufficient structure openness is needed for even penetration of the PVC plastisol through the carrier in order to have sufficient delamination strength between the top layers and the foamed backing layer. On the other hand, the structure of the carrier material should not be too open in order to prevent the PVC plastisol to fall through the carrier before the PVC has been gelated into a coherent PVC material.

In one embodiment of the vinyl floor covering, the nonwoven layer of fibers and the high modulus threads extending in longitudinal direction may be supplied in the vinyl floor covering manufacturing process separately, as long as the tensions in the vinyl floor covering manufacturing process are applied to all components of the carrier, including the nonwoven layer of fibers and the high modulus threads extending in longitudinal direction.

The carrier may comprise one or more further layers, each layer selected from a nonwoven layer of fibers, a scrim and/or high modulus threads extending in machine direction, for example to improve the mass uniformity of the carrier and/or to further reduce the shrinkage and/or contraction in cross machine direction of the nonwoven layer of fibers comprised in the carrier.

Preferably, the nonwoven layer of fibers and the high modulus threads extending in longitudinal direction, and optional further layers, are supplied as a single, integrated carrier wherein the high modulus threads extending in longitudinal direction and the nonwoven layer of fibers (and optional further layers) are connected to each other to form an integrated carrier. Connection of the high modulus threads extending in the longitudinal direction to the nonwoven layer of fibers can be performed by any known suitable process, such as for example by use of an adhesive such as a glue and/or a hot melt, or by thermal bonding, such as hot air bonding or calendaring, and/or by mechanical bonding processes, such as stitching, mechanical needling and/or fluid entanglement, for example hydroentanglement. The term "connected to" is to be understood to include also the situation wherein the high modulus threads extending in the longitudinal direction are located in between (i.e. embedded) two nonwoven layers of fibers, wherein the nonwoven layers of fibers are bonded to each other between the high modulus threads by any suitable process, thus integrating the high modulus threads extending in machine direction into the carrier by encapsulation by the fibers of the two nonwoven layers of fibers bonded to each other.

Preferably, the nonwoven layer of fibers and the high modulus threads extending in the longitudinal direction of the integrated carrier are connected to each other by thermal bonding and/or by mechanical bonding processes such that the application of an additional adhesive is not required and an adhesive free carrier is obtained. Applying an adhesive requires additional equipment and additional raw materials.

More preferably, the nonwoven layer of fibers and the high modulus threads extending in the longitudinal direction of the integrated carrier are connected to each other by thermal bonding such that the application of mechanical bonding processes is not required. Mechanical bonding processes inherently possess a risk of damaging the high modulus threads extending in the longitudinal direction. Preferably, the nonwoven layer of fibers and the high modulus threads extending in the longitudinal direction of the integrated carrier are connected to each other by thermal bonding only.

In an embodiment, the high modulus threads extending in the longitudinal direction comprised in the carrier comprise high modulus yarns, such as for example polyester yarns, such as polyethylene terephthalate (PET) yarns, polyamide yarns, such as polyamide-6 (PA6) yarns, glass yarns, aramid yarns or carbon yarns and/or other high modulus yarns or any combination thereof, which are capable to withstand the temperatures encountered in the vinyl floor covering manufacturing process. Preferably, the high modulus threads extending in the longitudinal direction comprise glass yarns. Preferably all high modulus threads extending in the longitudinal direction comprised in the carrier are high modulus yarns, more preferably all high modulus threads are glass yarns. The high modulus yarns have a modulus of at least 1 GPa, preferably at least 5 GPa, preferably at least 10 GPa, preferably at least 15 GPa, preferably at least 20 GPa, preferably at least 25 GPa, preferably at least 40 GPa, more preferably at least 50 GPa, most preferably at least 75 GPa.

The type and amount of high modulus yarns comprised as high modulus threads extending in the longitudinal direction in the carrier is selected such that the modulus of the carrier is at least 25 N/5cm as determined as the load at specified elongation of 2% (LASE2%) in accordance with EN29073-3 (08-1992) with a clamp speed of 200 mm/min. Preferably, the modulus of the carrier is at least 50 N/5cm, more preferably at least 100 N/5cm, even more preferably at least 200 N/5cm, most preferably at least 250 N/5cm.

Within the scope of the present invention it is understood that the term fibers refers to filaments. Staple fibers are fibers which have a specified, relatively short length in the range of 2 to 200 mm. Filaments are fibers having a length of more than 200 mm, preferably more than 500 mm, more preferably more than 1000 mm. Filaments may even be virtually endless, for example when formed by continuous extrusion and spinning of a filament through a spinning hole in a spinneret.

The fibers may have any cross sectional shape, including round, trilobal, multilobal or rectangular, the latter exhibiting a width and a height wherein the width may be considerably larger than the height, so that the fiber in this embodiment is a tape. Furthermore, said fibers may be mono-component, bicomponent or even multicomponent fibers.

In an embodiment, the fibers in the nonwoven layer of fibers are fibers having a linear density in the range of 1 to 25 dtex, preferably in the range of 2 to 20 dtex, more preferably in the range of 5 to 15 dtex, most preferably in the range of 5 to 10 dtex to provide processing stability and mass regularity to the carrier while maintaining sufficient structure openness for even penetration of the PVC plastisol through the carrier. The unit dtex defines the fineness of the fibers as their weight in grams per 10000 meter.

The nonwoven layer of fibers may be a nonwoven composed of filaments produced by well-known spunbonding processes wherein filaments are extruded from a spinneret and subsequently laid down on a conveyor belt as a web of filaments and subsequently bonding the web to form a nonwoven layer of fibers, or by a two-step process wherein filaments are spun and wound on bobbins, preferably in the form of multifilament yarns, followed by the step of unwinding the multifilament yarns and laying the filaments down on a conveyor belt as a web of filaments and bonding the web to form a nonwoven layer of fibers.

The fibers in the nonwoven layer of fibers are filaments in order to provide higher tensile strength and/or higher tear strength to the carrier and/or to the vinyl floor covering.

The nonwoven layer of fibers may be composed of thermoplastic fibers for at least 50 wt.% of the total weight of fibers in the nonwoven layer of fibers, preferably for at least 75 wt.%, more preferably for at least 90 wt.%, even preferably for at least 95 wt.%. Increasing the amount of thermoplastic fibers in the nonwoven layer of fibers increases the tensile strength and/or tear resistance and increases the flexibility of the vinyl floor covering.

In an embodiment the nonwoven layer of fibers is composed for 100 wt.% of thermoplastic fibers of the total weight of fibers in the nonwoven layer of fibers.

The thermoplastic polymer from which the thermoplastic fibers in the nonwoven layer of fibers are composed may be any type of thermoplastic polymer capable of withstanding the temperatures encountered in the vinyl floor covering manufacturing process. The thermoplastic fibers in the nonwoven layer of fibers may comprise a polyester, such as for example polyethylene terephthalate (PET) (based either on DMT or PTA), polybutylene terephthalate (PBT), polytrimethylene terephthalate (PTT), polyethylene naphthalate (PEN) and/or polylactic acid (PLA), a polyamide, such as for example polyamide-6 (PA6), polyamide-6,6 (PA6,6) and/or polyamide-6,10 (PA6,10), polyphenylenesulfide (PPS), polyethyleneimide (PEI) and/or polyoxymethylene (POM) and/or any copolymer or any blend thereof.

The thermoplastic fibers may comprise up to 25 wt.%, based on the total weight of the fibers, of additives, such as for example spinning auxiliaries, fillers, flame retardant materials, UV inhibitors, crystallization retarders/accelerators, plasticizers, heat stabilizers, antimicrobial additives, coloring agents such as for example carbon black or any combination thereof.

The weight of the nonwoven layer of fibers comprised in the carrier may be in the range of 40 g/m² to 250 g/m², preferably in the range of 45 g/m² to 200 g/m², preferably in the range of 50 g/m² to 150 g/m², more preferably in the range of 50 g/m² to 120 g/m², most preferably in the range of 60 g/m² to 100 g/m², to keep the structure of the carrier open enough for penetration of the impregnation layer of PVC plastisol and to provide sufficient mechanical adhesion of the impregnation layer to the carrier. Lower weight of the nonwoven layer of fibers results in less consumption of PVC plastisol in the impregnation layer, but a too low weight of the nonwoven layer of fibers could result in PVC plastisol falling through the carrier before the PVC has been gelated into a coherent PVC material.

In an embodiment the nonwoven layer of fibers composed of filaments, may be composed of a single type of mono-component fibers, which are bonded by any suitable bonding technique, such as for example by calendering the web of fibers between two calender rolls, by mechanical needling, by hydroentanglement, by ultrasonic bonding or by any combination thereof.

In another embodiment the nonwoven layer of fibers composed of filaments, may comprise two types of mono-component fibers, each type of mono-component fibers being composed of a polymer of different chemical construction having a different melting point. It is preferred that the melting points of the two different polymers differ by at least 10°C, preferably by at least 20°C. More preferably the melting points differ by at least 50°C. Such a product could be thermally bonded by subjecting the web of fibers to a temperature in the range of the melting point of the polymer with the lower melting point.

In yet another embodiment the nonwoven layer of fibers composed of filaments, may comprise bicomponent fibers. Bicomponent fibers are fibers composed of two polymers of different chemical construction. A basic distinction is being drawn between three types of bicomponent fibers: side-by-side types, core-sheath types and islands-in-the-sea types bicomponent fibers. In an embodiment the melting points of the two polymers building the bicomponent fibers differ by at least 10°C, preferably at least 20°C. More preferably the melting points differ by at least 50°C. Such a nonwoven layer comprising bicomponent fibers, when composed of side-by-side types and/or core-sheath type bicomponent fibers, could be thermally bonded by subjecting the web of fibers to a temperature in the range of the melting point of the polymer with the lower melting point. In a preferred embodiment the nonwoven carrier is predominantly made from core-sheath type bicomponent filaments. Predominantly is understood to mean that at least 50% of the fibers comprised in the nonwoven layer of fibers are core-sheath type bicomponent fibers, preferably at least 75%, more preferably at least 90%, even more preferably at least 95%, most preferably 100%.

Preferably the core/sheath ratio in the core/sheath bicomponent fibers lies between 95/5 Vol.% and 5/95 Vol.%. More preferably the core/sheath ratio lies between 50/50 Vol.% and 95/5 Vol.%.

In a preferred embodiment the sheath of the core/sheath bicomponent fibers consists mainly of a polyamide, preferably polyamide-6 (PA6), and the core consists mainly of a polyester, preferably polyethylene terephthalate (PET). According to the invention, the high modulus threads extending in the longitudinal direction of the vinyl floor covering are comprised in a scrim wherein the weft threads of the scrim are predominantly made of a polymer having a melting temperature equal to or less than the lowest melting temperature of the polymers comprised in the thermoplastic fibers comprised in the nonwoven layer of fibers. Preferably, the weft threads of the scrim are made of a polymer having a melting temperature at least 10°C, preferably at least 20°C, more preferably at least 50°C less than the lowest melting temperature of the polymers comprised in the thermoplastic fibers comprised in the nonwoven layer of fibers. The term predominantly made of is understood to mean that the weft threads are composed for at least 60 wt.%, preferably for at least 75 wt.%, more preferably at least 90 wt.%, more preferably at least 95 wt.%, even more preferably at least 99 wt.%, most preferably 100 wt.% of the total weight of the weft threads of the polymer having a melting temperature equal to or less than the lowest melting temperature of the polymers comprised in the thermoplastic fibers comprised in the nonwoven layer of fibers.

As is well known to the person skilled in the art, a scrim is an open lattice structure composed of at least two sets of parallel threads, wherein the first group of parallel threads is oriented at an angle, generally at a 90° angle, to the second group of parallel threads. The first group of parallel threads may be connected to the second group of parallel threads by chemical bonding and/or the first group of parallel threads may be interwoven with the second group of parallel threads to form a woven scrim. Preferably, the openings in the scrim have at least one dimension in the plane of the carrier material being at least 1 mm, preferably at least 2 mm, more preferably at least 5 mm. More preferably, the openings in the scrim have two dimensions in the plane of the carrier material being at least 1 mm, preferably at least 2 mm, more preferably at least 5 mm.

The melting temperature of a thermoplastic polymer is determined by Differential Scanning Calorimetry (DSC) as the temperature at the maximum value of the endothermic melting peak upon heating of the polymer at a rate of 20°C/min. The presence of weft threads in the scrim made predominantly of a polymer having a melting temperature equal to or less than the lowest melting temperature of the polymers comprised in the thermoplastic fibers comprised in the nonwoven layer of fibers enables thermal bonding of the weft threads in the scrim to the nonwoven layer of fibers, thus effectively thermally bonding the scrim to the nonwoven layer of fibers.

In an embodiment, the weft threads of the scrim are configured such that after thermal bonding of the scrim to the nonwoven layer of fiber the individual weft threads are still present as a continuous phase but do not exhibit a stiffness which causes surface defects, such as for example printing errors and/or surface irregularities, during production of the vinyl floor covering.

In an embodiment, the weft threads of the scrim are fully melted during thermal bonding of the scrim to the nonwoven layer of fibers. As there remain no (continuous) weft threads in the scrim after thermal bonding to the nonwoven layer of fibers surface defects, such as for example printing errors and/or surface irregularities, during production of the vinyl floor covering can not occur.

In an embodiment not according to the invention, the high modulus threads of the carrier extending in the longitudinal direction are not comprised in a scrim. The high modulus threads extending in the longitudinal direction are thus not connected to each other by threads extending in cross machine direction, also known as weft direction.

Surprisingly, it was found that a carrier comprising a nonwoven layer of fibers comprising thermoplastic fibers and high modulus threads extending in the longitudinal direction of the vinyl floor covering prevents, or at least reduces, the formation of wrinkles extending in the longitudinal direction of the vinyl floor covering and prevents, or at least reduces, the formation of printing errors and prevents, or at least reduces, the formation of surface irregularities in the (cushioned) vinyl floor covering after foaming and curing of the PVC plastisol in the foaming and optionally in the backing layer.

Although it has been observed that a scrim comprising glass yarns both as warp and weft threads fully eliminated the formation of wrinkles extending in machine direction in the vinyl floor covering, the scrim having glass yarns as weft threads may, depending on the actual tension and/or temperature encountered in the vinyl floor covering manufacturing process, induce surface irregularities in the final vinyl floor covering and/or may cause printing errors in the desired ink patterns applied onto the gelated and optionally foamed layer.

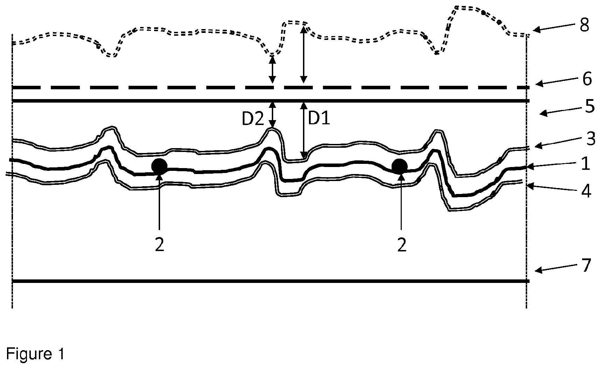

It is believed that the vinyl floor covering comprising a carrier comprising the nonwoven layer of fibers comprising thermoplastic fibers and high modulus threads extending in the longitudinal direction of the vinyl floor covering eliminates buckling of the weft threads, i.e. bending or kinking of the weft threads as a result of compressive stress, when the nonwoven layer of fibers shrinks or contracts in cross machine direction. Without being bound to theory it is believed that buckling of the weft threads of the scrim during gelation of the PVC plastisol in the impregnation layer results in an uneven surface of the gelated impregnation layer, especially when buckling of the weft threads occurs out of the plane forming a surface of the carrier, as is schematically depicted in Figure 1. A scrim comprises warp threads (2) and weft threads (1). The weft thread (1) has buckled during gelation of the impregnation layer of PVC plastisol. The impregnation layer has an irregular upper surface (3) and an irregular lower surface (4) due to buckling of the weft thread (1). Due to the uneven upper surface (3) of the gelated impregnation layer locally varying amounts, i.e. differences in layer thickness (D1, D2), of PVC plastisol optionally comprising a blowing agent will be applied as (foaming) layer coated on the irregular surface (3) of the gelated impregnation layer. The coating layer may still have a smooth, flat upper surface (5) directly after coating and after gelation of the PVC plastisol. A desired ink pattern and a wear layer (6) may be applied on the surface (5) of the coated layer. The locally varying amounts (D1, D2) of PVC plastisol comprising a blowing agent will induce surface irregularities in the surface (8) of the final cushioned vinyl floor covering after curing (foaming) of the foaming layer. At locations where a larger amount (D1) of PVC plastisol comprising a blowing agent is applied the final thickness of the cushioned vinyl floor covering after foaming of the foaming layer will be higher than at locations where a smaller amount (D2) of PVC plastisol comprising a blowing agent is applied resulting in surface irregularities in the surface (8) of the final cushioned vinyl floor covering.

Furthermore, it is believed that the uneven surfaces (3, 4) of the gelated impregnation layer, due to buckling of the weft threads (1) of the scrim upon shrinkage or contraction in cross machine direction of the nonwoven layer of fibers, complicates the local application of desired ink patterns on the gelated foaming layer (5). Although coating and subsequent gelation of the foaming layer may form an even surface (5) for the ink, it will be difficult to ensure application of an even pressure between the printing unit and the surface (5) of the gelated foaming layer over the surface to be printed, especially when the actual pressure is determined by the support provided by a supporting roller which is in direct contact with the opposite surface (4) of the irregular gelated impregnated layer. Finally, a backing layer (7) of foamable PVC plastisol may be coated on the opposite surface (4) of the irregular gelated impregnated layer. Due to the uneven lower surface (4) of the gelated impregnation layer locally varying amounts, i.e. differences in layer thickness of PVC plastisol comprising a blowing agent will also be applied as backing layer coated on the irregular surface (4) of the gelated impregnation layer. As the backing layer may be subjected to an embossing step, and the back side of the cushioned vinyl floor covering is not visible when installed on the floor, this effect may be of less importance.

The weft threads in the scrim made of a polymer having a melting temperature equal to or less than the lowest melting temperature of the polymers comprised in the thermoplastic fibers comprised in the nonwoven layer of fibers may comprise any polymer suitable to melt, or at least soften, at the temperatures encountered in the thermal bonding process to form an integrated carrier for cushioned vinyl floor coverings, to enable the weft threads to lose their structural shape. The polymer of the weft threads may preferably be selected from a polyester, preferably a copolyester, a polyamide, preferably a co-polyamide, a polyolefin such as polypropylene or polyethylene, and/or any co-polymer or any blend thereof.

## Claims

1. A vinyl floor covering comprising a carrier wherein the carrier comprises a nonwoven layer of fibers comprising thermoplastic fibers and high modulus threads extending in the longitudinal direction of the vinyl floor covering, the high modulus threads having a modulus of a least 1 GPa, the high modulus threads being spaced apart from each other, preferably at regular distances, wherein the thermoplastic fibers are thermoplastic filaments having a length of more than 200 mm, and wherein the high modulus threads extending in the longitudinal direction of the vinyl floor covering are comprised in a scrim wherein the weft threads of the scrim are predominantly made of a polymer having a melting temperature equal to or less than the lowest melting temperature of the polymers comprised in the thermoplastic fibers comprised in the nonwoven layer of fibers.

2. The vinyl floor covering according to claim 1 wherein the high modulus threads and the nonwoven layer of fibers comprising thermoplastic fibers are connected to each other to form an integrated carrier.

3. The vinyl floor covering according to any of the previous claims wherein the high modulus threads extending in the longitudinal direction of the vinyl floor covering have a modulus of a least 5 GPa, preferably at least 10 GPa, preferably at least 15 GPa, preferably at least 20 GPa, more preferably at least 25 GPa.

4. The vinyl floor covering according to any of the previous claims wherein the type and amount of high modulus threads extending in the longitudinal direction of the vinyl floor covering is selected such that the modulus of the carrier is at least 25 N/5cm, preferably at least 50 N/5cm, more preferably at least 100 N/5cm, even more preferably at least 200 N/5cm, most preferably at least 250 N/5cm, as determined as the load at specified elongation of 2% in accordance with EN29073-3 (08-1992).

5. The vinyl floor covering according to any of claims 1 to 4 wherein the weft threads of the scrim are made of a polymer having a melting temperature at least 10°C, preferably at least 20°C, more preferably at least 50°C less than the lowest melting temperature of the polymers comprised in the thermoplastic fibers comprised in the nonwoven layer of fibers.

6. The vinyl floor covering according to any claims 1 to 5 wherein the nonwoven layer of fibers comprises two types of mono-component filaments, each type of mono-component filaments being composed of a polymer of different chemical construction having a different melting point.

7. The vinyl floor covering according to claim 6 wherein the melting points of the polymers of the two types of mono-component filaments differ by at least 10°C, preferably by at least 20°C, more preferably by at least 50°C.

8. The vinyl floor covering according to any claims 1 to 5 wherein the nonwoven layer of fibers comprises bicomponent filaments composed of two polymers of different chemical construction having a different melting point.

9. The vinyl floor covering according to claim 8 wherein the melting points of the polymers of the two components of the bicomponent filaments differ by at least 10°C, preferably by at least 20°C, more preferably by at least 50°C.

## Patentansprüche

1. Vinylbodenbelag umfassend einen Träger, wobei der Träger eine Vliesschicht aus Fasern umfasst, die thermoplastische Fasern und sich in Längsrichtung des Vinylbodenbelags erstreckende Fäden mit hohem Modul umfassen, wobei die Fäden mit hohem Modul einen Modul von mindestens 1 GPa aufweisen und die Fäden mit hohem Modul, bevorzugt in regelmäßigen Abständen, voneinander beabstandet sind, wobei die thermoplastischen Fasern thermoplastische Filamente mit einer Länge von mehr als 200 mm sind und wobei die sich in Längsrichtung des Vinylbodenbelags erstreckenden Fäden mit hohem Modul in einem Gelege enthalten sind, wobei die Schussfäden des Geleges überwiegend aus einem Polymer bestehen, dessen Schmelztemperatur der niedrigsten Schmelztemperatur der in den thermoplastischen Fasern der Vliesschicht aus Fasern enthaltenen Polymere entspricht oder niedriger als diese ist.

2. Vinylbodenbelag nach Anspruch 1, wobei die Fäden mit hohem Modul und die thermoplastische Fasern umfassende Vliesschicht aus Fasern zum Bilden eines integrierten Trägers miteinander verbunden sind.

3. Vinylbodenbelag nach einem der vorhergehenden Ansprüche, wobei die sich in Längsrichtung des Vinylbodenbelags erstreckenden Fäden mit hohem Modul einen Modul von mindestens 5 GPa, bevorzugt von mindestens 10 GPa, bevorzugt von mindestens 15 GPa, bevorzugt von mindestens 20 GPa und bevorzugter von mindestens 25 GPa aufweisen.

4. Vinylbodenbelag nach einem der vorhergehenden Ansprüche, wobei die Art und die Menge der sich in Längsrichtung des Vinylbodenbelags erstreckenden Fäden mit hohem Modul so gewählt wird, dass der Modul des Trägers mindestens 25 N/5 cm, bevorzugt mindestens 50 N/5 cm, bevorzugter mindestens 100 N/5 cm, noch bevorzugter mindestens 200 N/5 cm und besonders bevorzugt mindestens 250 N/5 cm beträgt, bestimmt als die Last bei spezifizierter Streckung von 2 % gemäß EN29073-3 (08-1992).

5. Vinylbodenbelag nach einem der Ansprüche 1 bis 4, wobei die Schussfäden des Geleges aus einem Polymer bestehen, dessen Schmelztemperatur mindestens 10 °C, bevorzugt mindestens 20 °C, und bevorzugter mindestens 50 °C niedriger ist als die niedrigste Schmelztemperatur der in den thermoplastischen Fasern der Vliesschicht aus Fasern enthaltenen Polymere.

6. Vinylbodenbelag nach einem der Ansprüche 1 bis 5, wobei die Vliesschicht aus Fasern zwei Arten von Monokomponenten-Filamenten umfasst, wobei jede Art von Monokomponenten-Filamenten aus einem Polymer anderer chemischer Zusammensetzung mit einem anderen Schmelzpunkt besteht.

7. Vinylbodenbelag nach Anspruch 6, wobei die Schmelzpunkte der Polymere der zwei Arten von Monokomponenten-Filamenten um mindestens 10 °C, bevorzugt um mindestens 20 °C und bevorzugter um mindestens 50 °C voneinander abweichen.

8. Vinylbodenbelag nach einem der Ansprüche 1 bis 5, wobei die Vliesschicht aus Fasern Bikomponenten-Filamente umfassen, die aus zwei Polymeren unterschiedlicher chemischer Zusammensetzung mit unterschiedlichem Schmelzpunkt bestehen.

9. Vinylbodenbelag nach Anspruch 8, wobei die Schmelzpunkte der Polymere der zwei Komponenten der Bikomponenten-Filamente um mindestens 10 °C, bevorzugt um mindestens 20 °C und bevorzugter um mindestens 50 °C voneinander abweichen.

## Revendications

1. Revêtement de sol en vinyle comprenant un support, lequel support comprend une couche de non-tissé de fibres comprenant des fibres thermoplastiques et des fils à haut module s'étendant dans la direction longitudinale du revêtement de sol en vinyle, lesquels fils à haut module ont un module d'au moins 1 GPa et sont écartés les uns des autres, de préférence à intervalles réguliers, dans lequel les fibres thermoplastiques sont des filaments thermoplastiques longs de plus de 200 mm, et dans lequel les fils à haut module s'étendant dans la direction longitudinale du revêtement de sol en vinyle sont compris dans une toile dont les fils de trame sont en majeure partie faits d'un polymère qui présente une température de fusion inférieure ou égale à la plus basse des températures de fusion des polymères constituant les fibres thermoplastiques comprises dans la couche de non-tissé de fibres.

2. Revêtement de sol en vinyle conforme à la revendication 1, dans lequel les fils à haut module et la couche de non-tissé de fibres comprenant des fibres thermoplastiques sont attachés les uns aux autres pour former un support intégré.

3. Revêtement de sol en vinyle conforme à l'une des revendications précédentes, dans lequel les fils à haut module s'étendant dans la direction longitudinale du revêtement de sol en vinyle ont un module d'au moins 5 GPa, de préférence d'au moins 10 GPa, ou de préférence d'au moins 15 GPa, ou de préférence d'au moins 20 GPa, et mieux encore d'au moins 25 GPa.

4. Revêtement de sol en vinyle conforme à l'une des revendications précédentes, dans lequel la nature et la quantité des fils à haut module s'étendant dans la direction longitudinale du revêtement de sol en vinyle sont choisies de telle sorte que le module du support, déterminé comme étant la charge pour un allongement spécifié de 2 %, selon la norme EN29073-3 (août 1992), vaut au moins 25 N/5 cm, de préférence au moins 50 N/5 cm, mieux encore au moins 100 N/5 cm, même mieux encore au moins 200 N/5 cm, et surtout au moins 250 N/5 cm.

5. Revêtement de sol en vinyle conforme à l'une des revendications 1 à 4, dans lequel les fils de trame de la toile sont faits d'un polymère qui présente une température de fusion inférieure d'au moins 10 °C, de préférence d'au moins 20 °C et mieux encore d'au moins 50 °C à la plus basse des températures de fusion des polymères constituant les fibres thermoplastiques comprises dans la couche de non-tissé de fibres.

6. Revêtement de sol en vinyle conforme à l'une des revendications 1 à 5, dans lequel la couche de non-tissé de fibres comprend des filaments mono-composants de deux types, desquels types chacun est constitué d'un polymère présentant une structure chimique différente et un point de fusion différent.

7. Revêtement de sol en vinyle conforme à la revendication 6, dans lequel les points de fusion des polymères des deux types de filaments mono-composants diffèrent d'au moins 10 °C, de préférence d'au moins 20 °C et mieux encore d'au moins 50 °C.

8. Revêtement de sol en vinyle conforme à l'une des revendications 1 à 5, dans lequel la couche de non-tissé de fibres comprend des filaments bi-composants, constitués de deux polymères qui ont chacun une structure chimique différente et un point de fusion différent.

9. Revêtement de sol en vinyle conforme à la revendication 8, dans lequel les points de fusion des polymères des deux composants des filaments bi-composants diffèrent d'au moins 10 °C, de préférence d'au moins 20 °C et mieux encore d'au moins 50 °C.
